# EUROPEAN PATENT APPLICATION

(11) **EP 3 721 762 A1**
(43) Date of publication of application: **14.10.2020**
(21) Application number: 17934052.6
(22) Date of filing: 07.12.2017
(51) Int. Cl.: A47K 3/28

(54) **HYDROGEN WATER SHOWER DEVICE**

(71) Applicant: Gohda Water Treatment Technology Co., Inc., Tokyo 104-0041 (JP)
(72) Inventor: GOHDA, Toshihisa, Tokyo 104-0041 (JP)
(74) Representative: TBK
(86) International application number: PCT/JP2017/044033
(87) International publication number: WO 2019/111380

(57) **Abstract**

The present invention relates to a shower device that changes supplied typical water to hydrogen water and sprays the hydrogen water. In a hydrogen water shower device including a storage container for a hydrogen generating agent, the storage container for a hydrogen generating agent has a surface with an opening section, and the storage container for a hydrogen generating agent is disposed relative to a water passage between a water supplier and a shower discharger so that water enters the storage container for a hydrogen generating agent from the surface with the opening section and exits from the same surface to the water passage.

## Description

### Technical Field

The present invention relates to a hydrogen water shower device that changes supplied typical water to hydrogen water and sprays the hydrogen water.

### Background Art

In recent years, attention has been directed to an effect of water containing a large amount of hydrogen molecules (hydrogen water) on the health and other medical effects. Among the effects, there has been a reported effect of skin flexibility improvement provided by bathing in a bathtub filled with hydrogen water. Since aging lowers the skin flexibility, it is expected that improvement in skin flexibility suppresses skin retrogradation but achieves rejuvenation. Further, there has been a report stating that immersing hair in hydrogen water has improved softness and shininess of the hair. Moreover, there has been another report stating that hydrogen water is effective in avoiding damage on hair resulting from ultraviolet light exposure and chemical treatments, such as hair coloring and permanent waving, in particular, bleaching using hydrogen peroxide. On the other hand, taking shower tends to be preferred bathing as compared with bathing in a bathtub depending on the seasons, ages, regions, and other factors of the bathing. Hair washing and face washing at the time of bathing are performed by a shower in many cases, and taking shower is the international mainstream. A hydrogen water shower device capable of a hydrogen water shower has, however, hardly been put into use. A hydrogen water shower device having been proposed is a shower head connected via a hose to a discharge port of an electrolyte vessel that produces electrolyzed water based on water electrolysis (patent document 1). The shower device requires an electrolyzer to be installed in a bathroom and cannot therefore be used in a typical household from the viewpoints of space, maintenance management, and safety concern resulting from use of electricity in the bathroom. Under the circumstances described above, there has been a demand for a hydrogen water shower device that is readily installed in a bathroom, readily handled, highly safe, capable of continuously providing hydrogen water, and capable of providing the same effects as those provided by bathing in a bathtub.

### Prior Art Documents

### Patent Documents

Patent document 1: Japanese unexamined Patent Application Publication No. 2017-176926

### Summary of the Invention

### Object to be Solved by the Invention

An object of the present invention is to provide a hydrogen water shower device that is readily installed in a bathroom, readily handled, highly safe, capable of continuously providing hydrogen water, and capable of providing the same effects as those provided by bathing in a bathtub.

### Means to Solve the Object

To achieve the object described above, the present inventor has started a study on a method for using a hydrogen generating agent without use of an electrolyzer from the viewpoints of safety and ease of operation. In the case of a shower device, however, a fixed quantity of hydrogen needs to stably dissolve in flowing water, unlike in a bathtub. Further, the hydrogen water needs to be delivered for a fixed period with a water-flowing state and a no-water-flowing state alternately repeated. The problems described above cannot be solved by placing a hydrogen generating agent in the water passage of the shower device. To solve the problems, the present inventor has intensively conducted a study on the shape of a storage container that stores the hydrogen generating agent and the arrangement of the storage container and the water passage and has found that a specific shape of the storage container and a specific positional relationship between the storage container and the water passage can solve the problems described above and achieve the object. The present inventor has further found that the hydrogen concentration in the hydrogen water can be further stabilized by causing the temperature of the water passing through the shower device to fall within a fixed range and causing the quantity of the water passing through the shower device to fall within a fixed range. The present invention has been thus attained.

That is, the present invention is identified by the items shown below.
(1) A hydrogen water shower device comprising a storage container for a hydrogen generating agent, wherein the storage container for a hydrogen generating agent has a surface with an opening section, and the storage container for a hydrogen generating agent is disposed relative to a water passage between a water supplier and a shower discharger so that water enters the storage container for a hydrogen generating agent from the surface with the opening section and exits from the same surface to the water passage.
(2) The hydrogen water shower device described in aforementioned item (1), wherein the storage container for a hydrogen generating agent is disposed so that a surface direction of the surface with the opening section is the same direction as a water flow direction in the water passage.
(3) The hydrogen water shower device described in aforementioned item (1) or (2), further comprising a measuring mechanism and a displaying mechanism for a temperature of water passing through the water passage.
(4) The hydrogen water shower device described in any one of aforementioned items (1) to (3), further comprising a measuring mechanism and a displaying mechanism for a quantity of water passing through the water passage.
(5) The hydrogen water shower device described in any one of aforementioned items (1) to (4), further comprising a water-flow power generator.
(6) The hydrogen water shower device described in any one of aforementioned items (1) to (5), wherein the storage container for a hydrogen generating agent is attachable and detachable.
(7) The hydrogen water shower device described in any one of aforementioned items (1) to (6), wherein the shower device is a shower head.
(8) The hydrogen water shower device described in any one of aforementioned items (1) to (7), wherein a hydrogen generating agent is sodium borohydride.

### Effects of the Invention

The hydrogen water shower device according to the present invention is so configured that the storage container that stores the hydrogen generating agent is attached to the hydrogen water shower device, whereby the hydrogen water shower device is readily installed in a bathroom or a wash stand, readily handled, and is highly safe. Further, since the storage container is disposed in a specific positional relationship with respect to the water passage, the hydrogen water can be continuously and stably provided, and the hydrogen concentration in the hydrogen water can be increased, whereby the same effects as those provided by bathing in a hydrogen water bathtub are provided. Moreover, measuring and displaying the water temperature and the water quantity allows the temperature and quantity of the water passing through the shower device to be so adjusted as to fall within a fixed range, whereby the hydrogen concentration in the hydrogen water can be more stabilized.

### Brief Description of Drawings

[Figure 1] Figures 1(a) and 1(b) are each a diagrammatic view showing an example in which a storage container for a hydrogen generating agent is disposed relative to a water passage in a hydrogen water shower device of the present invention.
[Figure 2] Figure 2 shows an example of a shower head that is the hydrogen water shower device of the present invention. Figure 2(a) is a diagrammatic view of the interior structure of the shower head, and Figures 2(b) and 2(c) show the exterior appearance of the shower head.
[Figure 3] Figure 3 shows an example of the storage container for a hydrogen generating agent in the shower head that is the hydrogen water shower device of the present invention.

### Mode of Carrying Out the Invention

A hydrogen water shower device of the present invention is a hydrogen water shower device comprising a storage container for a hydrogen generating agent. The storage container for a hydrogen generating agent has a surface having an opening section, and the storage container for a hydrogen generating agent is disposed relative to a water passage between a water supplier and a shower discharger so that water enters the storage container for a hydrogen generating agent from the surface with the opening section and exits from the same surface to the water passage. In the present invention, the shower device refers to the portion from the portion connected to the water supplier to the shower discharger and includes a shower head section including a hose section connected to the water supplier and the shower discharger. In the present invention, however, only the shower head section is called the shower device in some cases. The storage container for a hydrogen generating agent in the present invention is a container that stores the hydrogen generating agent and has opening sections at least on one surface of the container, and from which water enters from the water passage and exits to the water passage. The shape, material, etc. of the storage container for a hydrogen generating agent of the present invention is not particularly limited as long as it has an opening from which water enters and exits to the water passage on at least one surface of the container, and it has a structure that can store the hydrogen generating agent. Examples of the shape of the storage container for a hydrogen generating agent include a circularly columnar shape and a rectangularly columnar shape. A circularly columnar shape is preferable because the hydrogen generating agent is readily dissolve in the water flowing from the water passage and there are no corners of the container where the hydrogen generating agent could be left. Examples of the material of the storage container for a hydrogen generating agent include a plastic material and a metal material. A plastic material is preferable from the viewpoint of reduction in weight. The shape, area, etc. of the opening sections provided on one surface of the storage container for a hydrogen generating agent are not particularly limited, and can be set as appropriate from the viewpoint of introducing and discharging a proper quantity of water into the storage container from the water passage, and the viewpoint of keeping the hydrogen generating agent in the storage container for a hydrogen generating agent in the container. Examples the shape of the opening sections include a circular shape, a triangular shape, a quadrangular shape, and a polygonal shape. The surface with an opening section of the storage container for a hydrogen generating agent may be a plate-shaped member having openings each having the shape and other factors described above or a mesh-shaped member. A plate-shaped member having the opening sections and a mesh-shaped member may be combined with each other, and placing the mesh-shaped member, such as a nylon mesh, in the plate-shaped member having circular opening sections preferably allows the water to smoothly enter from the water passage and to exit to the water passage and further allows suppression of spill of the hydrogen generating agent in the storage container from the storage container to the water passage.

The storage container for a hydrogen generating agent in the present invention is disposed relative to the water passage between the water supplier and the shower discharger so that the water enters the storage container for a hydrogen generating agent from the surface with the opening sections and the water exits to the water passage from the same surface. For example, attaching the storage container for a hydrogen generating agent to the water passage in such a way that the surface direction of the surface with the opening sections formed therein is the same direction as the water flow direction and the opening sections communicate with the water passage allows the water passing through the water passage to enter the storage container from the opening sections of the storage container, come into contact with the surface portion of the hydrogen generating agent in the storage container, and exits into the water passage from the same opening sections. Therefore, a large quantity of the hydrogen generating agent does not dissolve at once in the water but gradually dissolves by a fixed quantity, whereby quantitative hydrogen generation and dissolution of the generated hydrogen in the water can be achieved for a long period. The storage container for a hydrogen generating agent is preferably disposed from the side outside the water passage so that the opening sections are in contact with the water passage. Alternatively, the storage container for a hydrogen generating agent is preferably disposed from the side outside the water passage so that the opening sections are inserted into the water passage. The arrangement described above allows the hydrogen generating agent to gradually dissolve by a further fixed quantity without disturbing the flow of the water in the water passage, because portions of the storage container for a hydrogen generating agent that are the portions other than the opening sections are outside the water passage. On the other hand, when the opening sections are provided in two surfaces of the storage container that face each other, the storage container is installed in the water passage so that the surface direction of the opening section provided surface of the storage container is perpendicular to the water passage direction, and the water having entered from the opening sections in one of the surfaces exits from the opening sections in the other surface. In this case, a large quantity of the hydrogen generating agent dissolves in the water at once, so that hydrogen water having a stable concentration cannot be produced, and the hydrogen water cannot be produced for a long period.

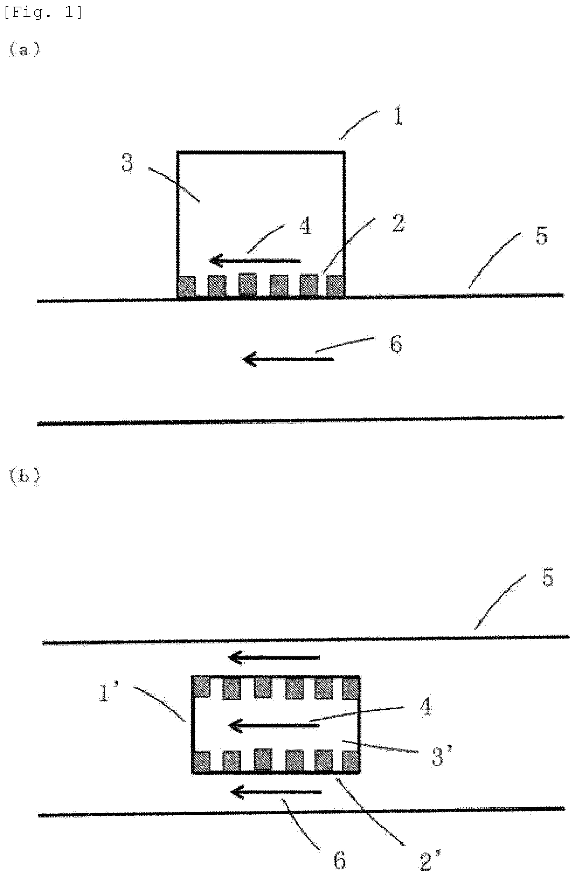

Figure 1 shows an example of an embodiment of the arrangement of the storage container for a hydrogen generating agent relative to the water passage in the hydrogen water shower device of the present invention. Figure 1(a) is a side view showing an example in which a storage container for a hydrogen generating agent (1) is disposed so that a surface thereof having opening sections (2) is in contact with a water passage (5) and the surface direction (4) of the surface with the opening sections is the same direction as the water flow direction (6). Figure 1(b) is a top view showing an example in which a storage container for a hydrogen generating agent (1') is so inserted into the water passage (5) that the surface direction (4) of the surface with opening sections (2') is the same direction as the water flow direction (6). The entire storage container for a hydrogen generating agent (1') may be inserted into the water passage, or the portions of the storage container for a hydrogen generating agent (1') excluding the opening sections (2') may be outside the water passage. In the example shown in Figure 1(a), the opening sections (2) of the storage container for a hydrogen generating agent (1) are in contact with the water passage (5), and the storage container for a hydrogen generating agent (1) may instead be disposed so that the opening sections (2) protrude into the water passage (5). In the hydrogen water shower device of the present invention, the structures shown in Figures 1(a) and 1(b) are each only need to be provided between the water supplier and the shower discharger. For example, the structures may each be provided in a hose section or a shower head section. The storage container for a hydrogen generating agent in the present invention may have opening sections on a surface different from the surface having opening sections which is disposed to communicate with the water passage, but it is preferable that the water enters from the water passage and exits to the water passage from a single surface. Alternatively, opening sections may be provided also in a side surface of the storage container that is the side surface facing the surface portion of the hydrogen generating agent stored in the storage container in such a way that the portion where the hydrogen generating agent is in contact with the water is small enough not to cause the hydrogen generating agent quickly dissolves, and the water may enter the storage container and exits therefrom also from the opening sections. The storage container for a hydrogen generating agent in the present invention may be so fixed to the hydrogen water shower device that the hydrogen generating agent can be replenished by opening and closing a surface other than the surface in contact with the water passage or inserted thereinto, or the storage container for a hydrogen generating agent itself may be attachable and detachable. When the storage container for a hydrogen generating agent itself is attachable and detachable and the hydrogen generating agent is consumed in the form of a cartridge-shaped container that stores the hydrogen generating agent, the entire container is preferably exchangeable from the viewpoint of easy handling and stable replenishment of the hydrogen generating agent. It is further preferable that the storage container for a hydrogen generating agent is transparent so that the quantity of left hydrogen generating agent is readily visually inspected. Protrusion may be provided in the storage container to prevent the hydrogen generating agent in the storage container from spilling from the storage container into the water passage.

The hydrogen water shower device of the present invention preferably comprises a mechanism that measures the temperature of the water passing through the water passage and a mechanism that displays the measured temperature. The degree of dissolution of the hydrogen generating agent in the water depends on the water temperature. When the water temperature is high, the amount of dissolution of the hydrogen generating agent in the water increases, resulting in an increase in the quantity of the generated hydrogen. When the water temperature is low, the amount of dissolution of the hydrogen generating agent in the water decreases, resulting in a decrease in the quantity of the generated hydrogen. To stabilize the concentration of the hydrogen in the hydrogen water discharged from the hydrogen water shower device at a guide concentration, it is preferable to provide the measuring mechanism that measures the temperature of the water passing through the water passage and the displaying mechanism that displays the measured water temperature. Since the hydrogen water shower device of the present invention comprises the measuring mechanism for a temperature of water and the displaying mechanism for a temperature of water, a temperature adjuster in the water supplier connected to the hydrogen water shower device can adjust the water temperature in accordance with the measured and displayed water temperature. The hydrogen water shower device of the present invention itself may instead be provided with the water temperature adjuster. The water temperature measuring mechanism in the hydrogen water shower device of the present invention can be formed of a typical temperature measurement component, for example, using a temperature sensor, and the water temperature displaying mechanism in the hydrogen water shower device of the present invention can be formed of a typical display component, for example, using a liquid crystal or LED display component. For example, an LED unit can be used to change the color of the emitted light in accordance with the water temperature having three patterns, "suitable temperature," "lower than suitable temperature," and "higher than suitable temperature." A user can adjust the water temperature to a suitable temperature by raising the water temperature to the point where the LED unit displays the suitable-temperature color when the water temperature is lower than the suitable temperature, whereas lowering the water temperature to the point where the LED unit displays the suitable-temperature color when the water temperature is higher than the suitable temperature. In the case of a shower device used by a typical user, a simple display method, such as the display method described above, allows the user to readily adjust the water temperature. Electric power required to operate the water temperature measuring mechanism and the water temperature displaying mechanism may be acquired via an outlet in the bathroom or outside the bathroom and can instead be acquired without an external power supply but by providing the hydrogen water shower device with a compact water-flow power generator. In a bathroom that is an environment in which a large amount of water is present, using a water-flow power generator to eliminate electrical contact with any component outside the hydrogen water shower device improves safety of the user. Further, since no outlet is typically provided in a bathroom, using the water-flow power generator simplifies the installation and handling of the hydrogen water shower device. The mechanisms that measure and display the temperature of the water passing through the water passage only need to be provided between the water supplier and the shower discharger. For example, the mechanisms may be provided in the hose section or the shower head section. The mechanisms are preferably provided in the vicinity of the storage container for a hydrogen generating agent.

The hydrogen water shower device of the present invention preferably comprises a measuring mechanism that measures the quantity of the water passing through the water passage and a displaying mechanism that displays the measured quantity of water. The degree of dissolution of the hydrogen generating agent in the water depends on the quantity of the water passing through the water passage. In the hydrogen water shower device of the present invention, an increase in the quantity of the water raises the pressure in the water passage, so that high-pressure water enters the storage container for a hydrogen generating agent, resulting in an increase in the quantity of hydrogen generating agent that dissolves in the water and an increase in the quantity of generated hydrogen. A decrease in the quantity of the water lowers the pressure in the water passage, so that low-pressure water enters the storage container for a hydrogen generating agent, resulting in a decrease in the quantity of hydrogen generating agent that dissolves in the water and a decrease in the quantity of generated hydrogen. Therefore, to stabilize the concentration of the hydrogen in the hydrogen water discharged from the hydrogen water shower device at a guide concentration, it is preferable to provide the mechanism that measures the quantity of the water passing through the water passage and the mechanism that displays the measured quantity of water. Since the hydrogen water shower device of the present invention comprises the water quantity measuring mechanism and the water quantity displaying mechanism, a water quantity adjuster in the water supplier connected to the hydrogen water shower device can adjust the water quantity in accordance with the measured and displayed water quantity. The hydrogen water shower device of the present invention itself may instead be provided with the water quantity adjuster. The water quantity measuring mechanism in the hydrogen water shower device of the present invention can be formed of a typical water quantity measurement component, for example, using a water quantity sensor, and the water quantity displaying mechanism in the hydrogen water shower device of the present invention can be formed of a typical water quantity display component, for example, using a liquid crystal or LED display component. For example, an LED unit can be used to change the color of the emitted light in accordance with the water quantity having three patterns, "suitable quantity," "smaller than suitable quantity," and "larger than suitable quantity." A user can adjust the water quantity to a suitable quantity by increasing the water quantity to the point where the LED unit displays the suitable-quantity color when the water quantity is smaller than the suitable quantity, whereas decreasing the water quantity to the point where the LED unit displays the suitable-quantity color when the water quantity is larger than the suitable quantity. When a shower device used by a typical user, a simple display method, such as the display method described above, allows the user to readily adjust the water quantity. Electric power required to operate the water quantity measuring mechanism and the water quantity displaying mechanism may be acquired via an outlet in the bathroom or outside the bathroom and is instead preferably acquired by providing a water-flow power generator, as in the case of the water temperature measuring mechanism and the water temperature displaying mechanism. The mechanisms that measure and display the quantity of the water passing through the water passage only need to be provided between the water supplier and the shower discharger. For example, the mechanisms may be provided in the hose section or the shower head section. The mechanisms are preferably provided in the vicinity of the storage container for a hydrogen generating agent.

In the hydrogen water shower device of the present invention, the hydrogen generating agent stored in the storage container for a hydrogen generating agent is not limited to a specific agent and can, for example, be aluminum, zinc, nickel, cobalt, magnesium, sodium, or any other metal, calcium hydride, magnesium hydride, sodium borohydride, lithium aluminum hydride, sodium hydride, or any other hydride. Any of the materials described above may be coated with fat, such as edible oil and natural oil, to adjust the state of the contact between the material and the water, or polyethylene glycol may be added to the fat. The hydrogen generating agent is preferably sodium borohydride from the viewpoint of stable generation of high-concentration hydrogen water. Sodium borohydride is preferably coated with vegetable oil and polyethylene glycol, and the sodium borohydride coated with vegetable oil and polyethylene glycol can be produced by mixing sodium borohydride, vegetable oil, and polyethylene glycol with one another, heating and melting the mixture, and cooling the melted mixture for solidification. Further, using the sodium borohydride allows removal of chlorine in the water and eliminates the necessity of separate use of an antichlor. Sodium borohydride is preferable also in this regard. The hydrogen generating agent does not necessarily have a specific shape and can be provided in the form of, for example, powder, a block, or a molded component.

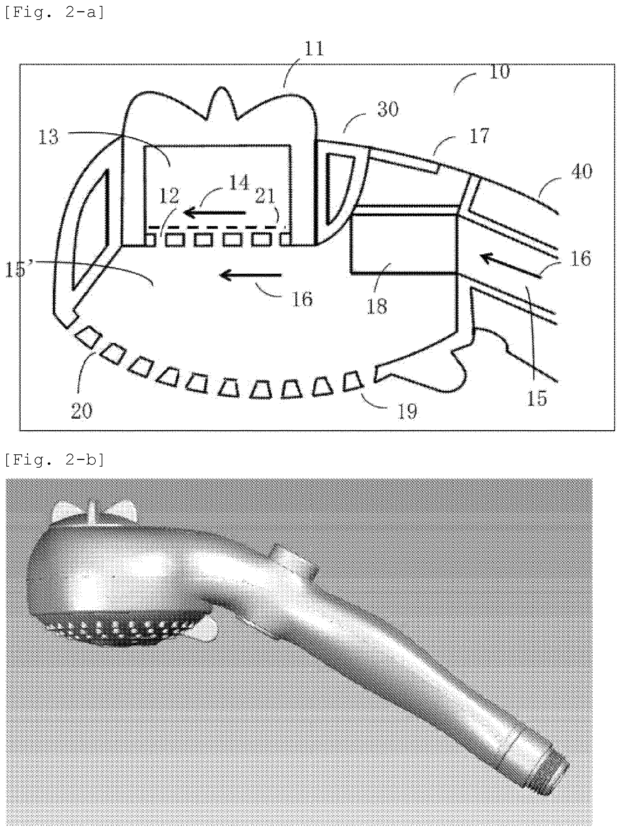

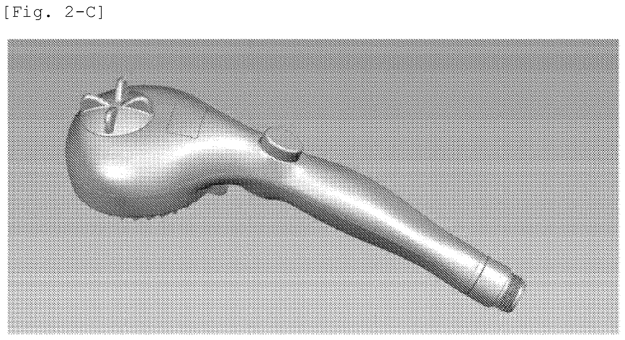

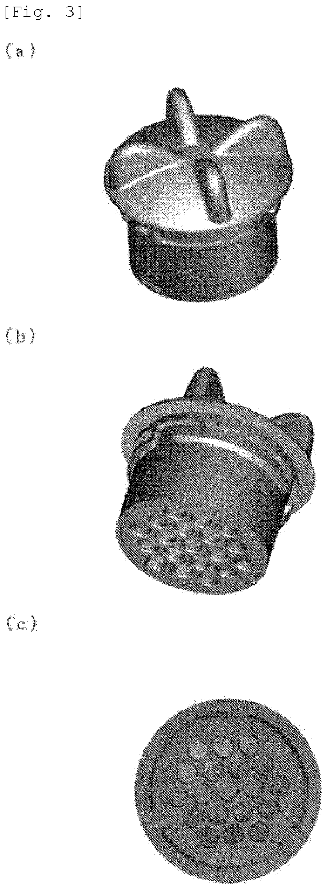

In the hydrogen water shower device of the present invention, the shower head may be provided with the storage container for a hydrogen generating agent. The shower head may be further provided with the water temperature measuring mechanism and displaying mechanism, and may be provided with the water quantity measuring mechanism and display displaying mechanism. Figure 2 shows a shower head that is an embodiment of the shower device of the present invention. A shower head (10) comprises of a head section (30) and a grip section (40). A storage container for a hydrogen generating agent (11) is detachably attached to the head section (30), and the head section (30) comprises a display section (17), which displays the water temperature and the water flow, and a water-flow power generator (18). The water-flow power generator (18) comprises a water temperature sensor and a water quantity sensor. The storage container for a hydrogen generating agent (11) comprises a plate (surface) with opening sections (12) and further comprises a nylon mesh (21) inside the plate described above. The storage container for a hydrogen generating agent (11) is so detachably attached that the surface thereof having the opening sections (12) is in contact with a water passage (15') and the interior of the storage container for a hydrogen generating agent (11) communicates with the water passage (15') via the opening sections (12). Figure 3 shows the exterior appearance of the storage container for a hydrogen generating agent (11). The water having flowed through the water passage (15) rotates blades of the water-flow power generator (18) and enters the water passage (15') on the upstream of a shower spray plate (19). Part of the water having entered the water passage (15') enters the storage container for a hydrogen generating agent (11) from the opening sections (12) of the storage container for a hydrogen generating agent (11), comes into contact with the hydrogen generating agent, and then exits from the opening sections (12) to the water passage (15') again. In this process, the surface portion of the hydrogen generating agent stored in the storage container for a hydrogen generating agent (11) dissolves in the water to generate hydrogen. The generated hydrogen dissolves in the water to generate hydrogen water. The water having passed through the water passage temporarily stays in a portion (15') on the upstream of the shower spray plate (19) in the water passage before sprayed from shower discharge ports (20), so that the pressure in the portion increases, whereby the pressure causes the water to pass through the opening sections (12) and readily enter the storage container for a hydrogen generating agent (11). It is therefore preferable that the storage container for a hydrogen generating agent (11) is so attached that the opening sections (12) thereof faces the shower spray plate (19) the water passage (15') being therebetween. It is further preferable that the shape of the shower discharge ports each taper toward the discharge side (side from which water exits) because the pressure in the water passage (15') can be further raised. When the storage container for a hydrogen generating agent (11) is so attached as to be insertable and removable from the side opposite the shower spray plate (19) (the side facing the shower spray plate is hereinafter also referred to as the front side, and the side opposite the shower spray plate is also hereinafter referred to as the rear side), the storage container for a hydrogen generating agent (11) can be readily attached and detached from the rear side of the shower head. In Figure 2, the arrow (14) represents the surface direction of the surface with the opening sections, and the arrow (16) represents the water flow direction. The shower head in Figure 2 comprises a grip section, and the shower head in the present invention may have a structure in which no grip section is provided and the shower head is fixed to a wall only by the head section. The shower head in Figure 2 may comprise a mechanism behind the shower spray plate that switches the form of the discharged water flow, for example, from a showering water flow to a straight water flow and vice versa. The storage container for a hydrogen generating agent (11) may be disposed so that the opening sections protrude into the water passage (15').

### Example

A test was conducted with a shower head of a shower device in a bathroom of a typical household replaced with the shower head shown in Figure 2. The sodium borohydride coated with vegetable oil and polyethylene glycol was used as the hydrogen generating agent. The storage container for a hydrogen generating agent stored 17 grams of hydrogen generating agent (sodium borohydride content was about 40%) . A water heater was set at a temperature of 42°C, the water quantity was 8 liters/minute, and the water temperature discharged from the shower device was 41°C. The 2-liter-water was collected in a position separate from the shower discharge ports by 30 cm when 1, 5, 10, 20, 30, 40, 50, and 60 minutes elapsed after the start of water supply, and a dissolved hydrogen concentration meter (KM2100DH manufactured by Kyoei Electronic Laboratory Co.) and a styler (Fine multiple styler F-604N manufactured by Tokyo Garasu Kikai Co., Ltd.) were used to measure the hydrogen concentration, the oxidation reduction potential (ORP), pH, and the water temperature at the time of 2-liter-water collection. The 60-minute test described above was conducted once a day for ten days. The results of the test are shown below. Table 1 shows the test results on the first day through the tenth day, and the average hydrogen concentration is the average of the results of the measurement performed when 1, 5, 10, 20, 30, 40, 50, and 60 minutes elapsed. Table 2 shows the results of the measurement performed when 1, 5, 10, 20, 30, 40, 50, and 60 minutes elapsed on the second day after the test started.

**[Table 1]**

| Elapsed time (days) | 1 | 2 | 3 | 4 | 5 | 6 | 7 | 8 | 9 | 10 |
|---|---|---|---|---|---|---|---|---|---|---|
| Average hydrogen concentration (ppb) | 588 | 704 | 606 | 621 | 647 | 576 | 754 | 762 | 514 | 573 |

**[Table 2]**

| | | | | | | | | |
|---|---|---|---|---|---|---|---|---|
| Elapsed time (minutes) | 1 | 5 | 10 | 20 | 30 | 40 | 50 | 60 |
| Hydrogen concentration (ppb) | 775 | 937 | 623 | 756 | 635 | 652 | 715 | 542 |
| ORP (mv) | -517 | -616 | -402 | -527 | -457 | -465 | -486 | -381 |
| pH | 8.56 | 8.59 | 8.42 | 8.47 | 8.42 | 8.42 | 8.44 | 8.28 |
| Water temperature (°C) | 40.5 | 40.7 | 40.6 | 40.7 | 40.8 | 40.7 | 40.7 | 40.6 |

Using the shower head that is the hydrogen water shower device of the present invention allows generation of high-concentration hydrogen water having average hydrogen concentration higher than or equal to 500 ppb for ten days, as seen from Table 1. The result in the form of concentration can be converted into a period of 600 minutes (60 minutes/day times 10 days), which means that the hydrogen water lasts for 60 days provided that the shower period per person is 10 minutes. Once used on a certain day, the shower device is not used in many cases for a full day before the next use. Even in this case, in which the shower device is used intermittently, the shower head of the present invention can provide the high-concentration hydrogen water. Table 2 shows that the high-concentration hydrogen water is stably provided after each of the elapsed periods.

### Industrial Applicability

The hydrogen water shower device of the present invention is readily installed in a bathroom and a washstand, readily handled, highly safe, and capable of continuously providing hydrogen water, and taking a hydrogen water shower from the hydrogen water shower device of the present invention allows improvement in skin flexibility, improvement in softness and shininess of the hair, and recovery from damage on hair, whereby a hydrogen water shower can be readily used in the same method for installing and using a shower device of related art. The hydrogen water shower device of the present invention can therefore be preferably used in a bath house, a hospital, a beauty parlor, and a variety of other facilities and typical households.

### Explanation of Letters and Numerals

1 Storage container for a hydrogen generating agent
1' Storage container for a hydrogen generating agent
2 Opening section
2' Opening section
3 Hydrogen generating agent storage
3' Hydrogen generating agent storage
4 Surface direction
5 Water passage
6 Water flow direction
10 Shower head
11 Storage container for a hydrogen generating agent
12 Opening section
13 Hydrogen generating agent storage
14 Surface direction
15 Water passage
15' Water passage
16 Water flow direction
17 Display section
18 Water-flow power generator
19 Shower spray plate
20 Shower discharge port
21 Nylon mesh
30 Head section
40 Grip section

## Claims

1. A hydrogen water shower device comprising a storage container for a hydrogen generating agent, wherein the storage container for a hydrogen generating agent has a surface with an opening section, and the storage container for a hydrogen generating agent is disposed relative to a water passage between a water supplier and a shower discharger so that water enters the storage container for a hydrogen generating agent from the surface with the opening section and exits from the same surface to the water passage.

2. The hydrogen water shower device according to claim 1, wherein the storage container for a hydrogen generating agent is disposed so that a surface direction of the surface with the opening section is the same direction as a water flow direction in the water passage.

3. The hydrogen water shower device according to claim 1 or 2, further comprising a measuring mechanism and a displaying mechanism for a temperature of water passing through the water passage.

4. The hydrogen water shower device according to any one of claims 1 to 3, further comprising a measuring mechanism and a displaying mechanism for a quantity of water passing through the water passage.

5. The hydrogen water shower device according to any one of claims 1 to 4, further comprising a water-flow power generator.

6. The hydrogen water shower device according to any one of claims 1 to 5, wherein the storage container for a hydrogen generating agent is attachable and detachable.

7. The hydrogen water shower device according to any one of claims 1 to 6, wherein the shower device is a shower head.

8. The hydrogen water shower device according to any one of claims 1 to 7, wherein a hydrogen generating agent is sodium borohydride.
